Europäisches Patentamt

European Patent Office

Office européen des brevets

(19)

(11) Veröffentlichungsnummer: **0 192 844**
**B1**

(12) **EUROPÄISCHE PATENTSCHRIFT**

(45) Veröffentlichungstag der Patentschrift: **04.07.90**

(51) Int. Cl.⁵: **C 03 C 8/04, C 03 C 8/10**

(21) Anmeldenummer: **85115950.9**

(22) Anmeldetag: **13.12.85**

(54) Fritten für Kristallausscheidungsglasuren.

(30) Priorität: **01.03.85 DE 3507218**

(43) Veröffentlichungstag der Anmeldung:
**03.09.86 Patentblatt 86/36**

(45) Bekanntmachung des Hinweises auf die
Patenterteilung:
**04.07.90 Patentblatt 90/27**

(84) Benannte Vertragsstaaten:
**AT BE DE FR GB IT NL**

(56) Entgegenhaltungen:
**BE-A- 628 121**
**FR-A-2 052 326**
**US-A-3 684 536**

(73) Patentinhaber: **Degussa Aktiengesellschaft**
**Weissfrauenstrasse 9**
**D-6000 Frankfurt am Main 1 (DE)**

(72) Erfinder: **Fischer, Robert, Dr.**
**J. S. Bach-Strasse 17**
**D-6053 Obertshausen (DE)**
Erfinder: **Menschner, Rolf, Dipl.-Ing.**
**Offenbacher Landstrasse 357 A**
**D-6000 Frakfurt am Main (DE)**

Courier Press, Leamington Spa, England.

**Beschreibung**

Die Erfindung betrifft Fritten für Kristallausscheidungsglasuren, bestehend aus jeweils 0 bis 20 Gew.% Kalziumoxid, Magnesiumoxid, Strontiumoxid und/oder Bariumoxid, 3 bis 15 Gew.% Alkalioxid, 5 bis 20 Gew.% Zinkoxid, 0 bis 40 Gew.% Bleioxid, 0,1 bis 8 Gew.% Aluminiumoxid, 15 bis 60 Gew.% Siliziumdioxid, 5 bis 25 Gew.% Boroxid und Molybdänoxid.

Glasuren sind dem keramischen Scherben angepasste Gläser. Man unterscheidet zwischen Rohglasuren, bei denen die überweigend natürlichen Rohstoffe ohne vorausgehende Einschmelzung zum Glasurschlicker vermahlen werden, und Fritteglasuren, bei denen aus den Rohstoffen eine Vorschmelze hergestellt und aus dieser durch Abschrecken ein Granulat erzeugt wird.

Seit tausenden von Jahren werden keramische Oberflächen mit Glasuren geschmückt und geschützt. Die Mode und der technische Fortschritt bewirken eine ständige Anpassung der Glasuren an die Verbrauchergewohnheiten. So werden in vielen Fällen auch Kristallausscheidungsglasuren verwendet, bei denen sich in der Glasphase durch gelenkte Entglasung Kristalle ausscheiden, die bis zu makroskopischer Größe wachsen können. Solche Glasuren werden beispielsweise in der DE—OS 32 29 838 beschrieben.

Aus der EP—OS 25 187 sind Glasurfritten bekannt, die Alkalioxide, Erdalkalioxide, Zinkoxid, Aluminiumoxid, Siliziumdioxid, Boroxid und bis zu 1% Molybdänoxid neben anderen Bestandteilen enthalten. Diese Glasuren zeigen allerdings keine Kristallausscheidungseffekte.

In der Praxis setzt man zur Herstellung von molybdänoxidhaltigen Kristallausscheidungsglasuren bekannten Fritten vor dem Einbrennen größere Mengen Molybdänsalze zu, vorzugsweise Molybdäntrioxid. Dieses Verfahren hat jedoch den Nachteil, daß beim Brennen große Anteile des zugesetzten Molybdänoxids je nach der Brenntemperatur absublimieren und die Ausbildung der Glasur stark von den Brennbedingungen abhängt. Versuche, die Molybdänsalze den Rohstoffen schon vor dem Einschmelzen bei der Fritteherstellung zuzusetzen, scheiterten an der Eigenschaft solcher Schmelzen, beim Abschrecken im Wasser explosionsartig zu zerplatzen.

Es war daher Aufgabe der vorliegenden Erfindung, Fritten für Kristallausscheidungsglasuren zu entwickeln, bestehend aus jeweils 0 bis 20 Gew.% Kalziumoxid, Magnesiumoxid, Strontiumoxid und/oder Bariumoxid, 3 bis 15 Gew.% Alkalioxid, 5 bis 20 Gew.% Zinkoxid, 0 bis 40 Gew.% Bleioxid, 0,1 bis 8 Gew.% Aluminiumoxid, 20 bis 60 Gew.% Siliziumdioxid, 5 bis 25 Gew.% Boroxid und Molybdänoxid, die in der Glasur unabhängig von den Brennbedingungen gutgeformte Kristalle ausbilden und beim Abschrecken der Schmelze in Wasser nicht zu explosionsartigen Erscheinungen neigen.

Diese Aufgabe wurde erfindungsgemäß dadurch gelöst, daß die Fritten 2 bis 30 Gew.% Molybdänoxid und zusätzlich 0 bis 40 Gew.% Wismutoxid enthalten, wobei der Gesamtgehalt an Wismutoxid, Bleioxid und Erdalkalioxiden 5 bis 40 Gew.% betragen muß.

Vorzugsweise enthalten die Fritten 0 bis 16 Gew.% Kalziumoxid, 0 bis 11 Gew.% Magnesiumoxid, 0 bis 10 Gew.% Strontiumoxid, 0 bis 10 Gew.% Bariumoxid, 3 bis 11 Gew.% Alkalioxide, 5 bis 16 Gew.% Zinkoxid, 0 bis 30 Gew.% Bleioxid, 0,3 bis 5 Gew.% Aluminiumoxid, 18 bis 50 Gew.% Siliziumdioxid, 7 bis 20 Gew.% Boroxid, 14 bis 20 Gew.% Molybdänoxid und 0 bis 25 Gew.% Wismutoxid, wobei der Gesamtgehalt an Wismutoxid, Bleioxid und Erdalkalioxiden 10 bis 36 Gew.% betragen muß. Am besten bewährt haben sich Fritten, die 5 bis 30 Gew.% Wismutoxid enthalten. Enstprechende Schmelzen zeigen in Wasser ein normales Abschreckverhalten und können leicht zerkleinert werden.

Die erfindungsgemäßen Fritten können insbesondere im Temperaturbereich von 960 bis 1200°C eingesetzt werden, wo man schöne, sternförmige bis farnähnliche Kristalle erhält. Diese Fritten und die daraus hergestellten Glasuren sind außerdem sehr säurebeständig.

Die Abbildungen I und II zeigen solche Kristalle in der Vergrößerung 10:1 bzw. 25:1.

Die Herstellung der Fritten folgt durch Zusammenschmelzen Rohstoffe, wie Siliziumdioxid, Kaolin, Kalkspat, Kalifeldspat, Soda, Zinkoxid und Borsäure. Das Molybdänoxid wird vorteilhafterweise in Form von Molybdäntrioxid zugesetzt.

Im folgenden sind einige Frittenzusammensetzungen angegeben, die besonders schöne Kristallausscheidungen zeigen:

2

| Fritte | CaO (Gew.%) | MgO (Gew.%) | BaO (Gew.%) | SrO (Gew.%) | $Na_2O$ (Gew.%) | ZnO (Gew.%) | PbO (Gew.%) | $Al_2O_3$ (Gew.%) | $SiO_2$ (Gew.%) | $B_2O_3$ (Gew.%) | $MoO_3$ (Gew.%) | $Bi_2O_3$ (Gew.%) |
|---|---|---|---|---|---|---|---|---|---|---|---|---|
| 1 | 7,13 | — | — | — | 4,08 | 9,91 | — | 2,92 | 31,34 | 8,81 | 14,40 | 21,40 |
| 2 | — | — | 9,49 | — | 3,93 | 9,50 | — | 2,77 | 30,05 | 8,46 | 14,40 | 21,40 |
| 3 | — | 10,34 | — | — | 3,79 | 9,23 | — | 2,72 | 29,90 | 8,21 | 14,40 | 21,40 |
| 4 | — | — | — | 8,58 | 3,99 | 9,67 | — | 2,80 | 30,57 | 8,60 | 14,40 | 21,40 |
| 5 | 10,09 | — | — | — | 4,31 | 6,77 | — | 2,88 | 34,61 | 9,35 | 16,00 | 16,00 |
| 6 | 7,28 | — | — | — | 6,16 | 6,52 | — | 2,80 | 39,74 | 13,50 | 16,00 | 8,00 |
| 7 | 11,13 | — | — | — | 8,21 | 8,86 | — | 0,39 | 35,08 | 18,34 | 18,00 | — |

# EP 0 192 844 B1

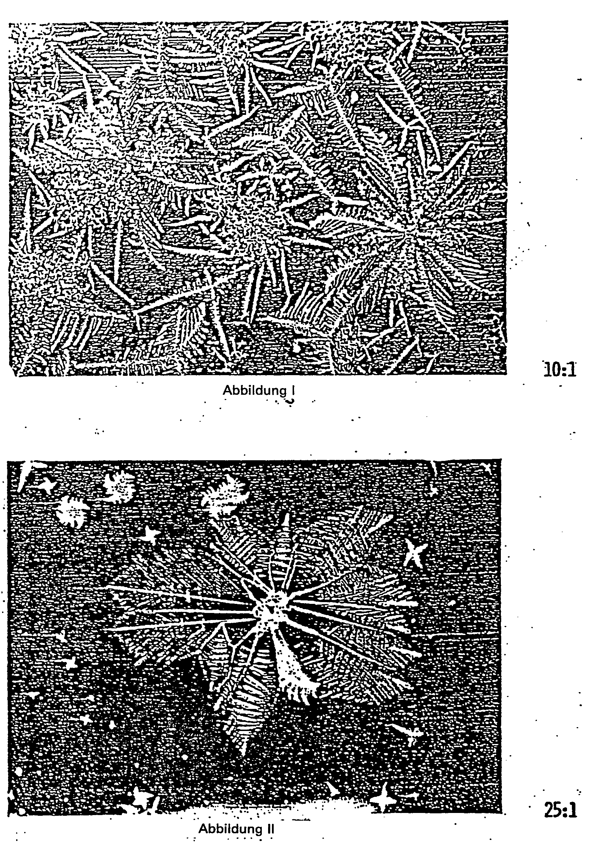

**Patentansprüche**

1. Fritten für Kristallausscheidungslasuren, bestehend aus jeweils 0 bis 20 Gew.% Kalziumoxid, Magnesiumoxid, Strontiumoxid und/oder Bariumoxid, 3 bis 15 Gew.% Alkalioxide, 5 bis 20 Gew.% Zinkoxid, 0 bis 40 Gew.% Bleioxid, 0,1 bis 8 Gew.% Aluminiumoxid, 15 bis 60 Gew.% Siliziumdioxid, 5 bis 25 Gew.% Boroxid und Molybdänoxid, dadurch gekennzeichnet, daß sie 2 bis 30 Gew.% Molybdänoxid und zusätzlich 0 bis 40 Gew.% Wismutoxid enthalten, wobei der Gesamtgehalt an Wismutoxid, Bleioxid und Erdalkalioxiden 5 bis 40 Gew.% betragen muß.

2. Fritten nach Anspruch 1, dadurch gekennzeichnet, daß sie 0 bis 16 Gew.% Kalziumoxid, 0 bis 11 Gew.% Magnesiumoxid, 0 bis 10 Gew.% Strontiumoxid, 0 bis 10 Gew.% Bariumoxid, 3 bis 11 Gew.% Alkalioxide, 5 bis 16 Gew.% Zinkoxid, 0 bis 30 Gew.% Bleioxid, 0,3 bis 5 Gew.% Aluminiumoxid, 18 bis 50 Gew.% Siliziumdioxid, 7 bis 20 Gew.% Boroxid, 14 bis 20 Gew.% Molybdänoxid und 0 bis 25 Gew.% Wismutoxid enthalten, wobei der Gesamtgehalt an Wismutoxid, Bleioxid und Erdalkalioxiden 10 bis 36 Gew.% betragen muß.

3. Fritten nach Anspruch 1, dadurch gekennzeichnet, daß sie 5 bis 30 Gew.% Wismutoxid enthalten.

**Revendications**

1. Frittes pour glaçures à dépôts cristallins, constituées de 0 à 20% en poids, respectivement, d'oxyde de calcium, d'oxyde de magnésium, d'oxyde de strontium et/ou d'oxyde de baryum, de 3 à 15% en poids d'oxydes de métaux alcalins, de 5 à 20% en poids d'oxyde de zinc, de 0 à 40% en poids d'oxyde de plomb, de 0,1 à 8% en poids d'oxyde d'aluminium, de 15 à 60% en poids de dioxyde de silicium, de 5 à 25% en poids d'oxyde de bore et d'oxyde de molybdène, caractérisées en ce qu'elles contiennent de 2 à 30% en poids d'oxyde de molybdène et en outre de 0 à 40% en poids d'oxyde de bismuth, la teneur totale en oxyde de bismuth, oxyde de plomb et oxydes de métaux alcalino-terreux devant aller de 5 à 40% en poids.

2. Frittes selon la revendication 1, caractérisées en ce qu'elles contiennent de 0 à 16% en poids d'oxyde de calcium, de 0 à 11% en poids d'oxyde de magnésium, de 0 à 10% en poids d'oxyde de strontium, de 0 à 10% en poids d'oxyde de baryum, de 3 à 11% en poids d'oxydes de métaux alcalins, de 5 à 16% en poids d'oxyde de zinc, de 0 à 30% en poids d'oxyde de plomb, de 0,3 à 5% en poids d'oxyde d'aluminium, de 18 à 50% en poids de dioxyde de silicium, de 7 à 20% en poids d'oxyde de bore, de 14 à 20% poids d'oxyde de molybdène et de 0 à 25% en poids d'oxyde de bismuth, la teneur totale en oxyde de bismuth, oxyde de plomb et oxydes de métaux alcalino-terreux devant aller de 10 à 36% en poids.

3. Frittes selon la revendication 1, caractérisées en ce qu'elles contiennent de 5 à 30% en poids d'oxyde de bismuth.

**Claims**

1. Frits for crystal separation glazes consisting of 0 to 20% by weight each of calcium oxide, magnesium oxide, strontium oxide and/or barium oxide, 3 to 15% by weight alkali oxides, 5 to 20% by weight zinc oxide, 0 to 40% by weight lead oxide, 0.1 to 8% by weight aluminium oxide, 15 to 60% by weight silicon dioxide, 5 to 25% by weight boron oxide and molybdenum oxide, characterized in that they contain 2 to 30% by weight molybdenum oxide and, in addition, 0 to 40% by weight bismuth oxide, the total content of bismuth oxide, lead oxide and alkaline earth oxides having to be from 5 to 40% by weight.

2. Frits as claimed in claim 1, characterized in that they contain 0 to 16% by weight calcium oxide, 0 to 11% by weight magnesium oxide, 0 to 10% by weight strontium oxide, 0 to 10% by weight barium oxide, 3 to 11% by weight alkali oxides, 5 to 16% by weight zinc oxide, 0 to 30% by weight lead oxide, 0.3 to 5% by weight aluminium oxide, 18 to 50% by weight silicon dioxide, 7 to 20% by weight boron oxide, 14 to 20% by weight molybdenum oxide and 0 to 25% by weight bismuth oxide, the total content of bismuth oxide, lead oxide and alkaline earth oxides having to be from 10 to 36% by weight.

3. Frits as claimed in claim 1, characterized in that they contain from 5 to 30% by weight bismuth oxide.

Abbildung I

10:1

Abbildung II

25:1